# EUROPÄISCHE PATENTSCHRIFT

(11) **EP 1 674 006 B1**
(45) Veröffentlichungstag und Bekanntmachung des Hinweises auf die Patenterteilung: **31.10.2007**
(21) Anmeldenummer: 04030254.9
(22) Anmeldetag: 21.12.2004
(51) Int. Cl.: A47J 31/00, A47J 31/44, B67D 1/04, B67D 1/12

(54) **Milchschaum-Kaffee-Getränkbereiter**
Apparatus for the preparation of cappuccino
Appareil pour la préparation de cappuccino

(43) Veröffentlichungstag der Anmeldung: 28.06.2006
(73) Patentinhaber: MobileService GmbH, 6063 Stalden (CH)
(72) Erfinder: Rietscher, Hans-Joachim, 91788 Pappenheim (DE)
(74) Vertreter: Neubauer, Hans-Jürgen

(56) Entgegenhaltungen:
- EP-A- 1 428 791
- WO-A-01/74211
- DE-A1- 19 944 063
- US-A- 2 023 837
- US-A- 2 919 726

## Beschreibung

Die Erfindung betrifft einen Milchschaum-Kaffee-Getränkbereiter nach dem Oberbegriff des Anspruchs 1. WO 01/74211 A1 beschreibt einen solchen gattungsgemäßer Getränkbereiter.

Milchschaum-Kaffee-Getränke in der Art von Cappuccino-Getränken liegen aufgrund ihres hervorragenden Geschmacks und ihrer guten Verträglichkeit im Trend. Die Herstellung solcher Milchschaum-Kaffee-Getränke erfolgt in allgemein bekannter Weise durch sog. Cappuccino-Maschinen. Diese enthalten einen elektrisch aufheizbaren Heißwasser-Drucktank. Aus diesem Heißwasser-Drucktank kann einerseits heißes Wasser durch ein mit Kaffeepulver gefülltes Sieb zur Herstellung von Kaffee/Espresso geleitet werden. Zudem kann aus dem Heißwasser-Drucktank Wasserdampf über eine ventilgesteuerte Schäumdüse zum Aufschäumen von Milch entnommen werden. Dazu wird in ein Gefäß kalte Milch geschüttet und der heiße Wasserdampf durch die Milch geleitet, wodurch sich relativ stabiler Milchschaum ausbildet. Zur Bereitung eines Milchschaum-Kaffee-Getränks in der Art eines Cappuccinos wird entweder heißer Kaffee in eine Trinktasse gegeben und anschließend Milchschaum darauf geschüttet oder Milchschaum wird vorab in der Trinktasse mittels der Dampfdüse erzeugt und anschließend Kaffee eingefüllt, wobei der Milchschaum auf dem Kaffee aufschwimmt. Cappuccino-Maschinen sind als großvolumige Profimaschinen für Cafes und Gaststätten ebenso bekannt, wie als Kleingeräte für die private Nutzung.

Alle diese Cappuccino-Maschinen benötigen einen Heißwasser-Drucktank, in dem unter Zufuhr hoher elektrischer Energie Heißwasser und über die Schäumdüse Wasserdampf erzeugt wird. Diese hohe Energie wird aus dem Elektronetz entnommen, so dass eine ständige Elektrokabelverbindung erforderlich ist. Eine netzunabhängige, mobile Milchschaum-Kaffee-Getränkbereitung ist wegen des hohen Energieverbrauchs mit der vorstehenden Technik praktisch nicht durchführbar.

Zudem sind kleine batteriebetriebene Handquirle zum Zwecke einer Milchaufschäumung bekannt. Ein Cappuccino wird damit so hergestellt, dass Milch in eine Tasse gegeben und so lange gequirlt wird, bis Milchschaum entstanden ist. Anschließend wird Kaffee dazugegeben. Diese mobile Art der Cappuccinoherstellung ist jedoch ersichtlich auf die Bereitung weniger Cappuccinos im Privatbereich gerichtet. Für den professionellen mobilen Einsatz ist diese Cappuccinoherstellung jedoch nicht geeignet, da aus Hygienegründen auszuschließen ist, dass in einer Vielzahl unterschiedlicher Trinktassen für unterschiedliche Personen nacheinander mit nur einem Handquirl jeweils Milch aufgeschäumt wird. Zudem wäre die Handhabung zeitaufwendig und umständlich.

Die Qualität von mobil ausgeschänkten Kaffeegetränken oder Milch-Kaffee-Getränken auf Veranstaltungen oder in Transportmitteln ist bisher eher dürftig - ein mobiler Ausschank von wohlschmeckenden, gut verträglichen Milchschaum-Kaffee-Getränken als Cappuccinos wird nicht angeboten.

Aufgabe der Erfindung ist es, einen Milchschaum-Kaffee-Getränkebereiter zur Verfügung zu stellen, der im professionellen Einsatz für den mobilen Ausschank von Milchschaum-Kaffee-Getränken (Cappuccinos) geeignet ist.

Diese Aufgabe wird mit den Merkmalen des Anspruchs 1 sowie mit den Merkmalen des Anspruchs 4 gelöst.

Gemäß Anspruch 1 ist der Milchschaum-Kaffee-Getränkbereiter von einer bereiterexternen Energiezuführung unabhängig und mobil ausgeführt. Dazu sind in einer Aufnahmehalterung zwei nachfüllbare und bevorzugt wechselbare Flüssigkeitsbehälter als Kaffeebehälter und Milchbehälter voneinander thermisch gedämmt angeordnet und in der Betriebsstellung jeweils mit einer unteren Ausströmöffnung an ein zugeordnetes Behälteranschlussventil vorzugsweise eine Schnellkupplung der Aufnahmehalterung gekuppelt.

Die Behälteranschlussventile sind durch Leitungen mit zugeordneten manuell betätigbaren Zapfventilen mit Zapföffnungen verbunden.

Dem Milchbehälter sind von einer bereiterexternen Energiezuführung unabhängige Milch-Aufschäummittel zugeordnet dergestalt, dass aus einer am Milchbehälter wechselbar angeschlossenen Druckpatrone Distickstoffoxyd (N₂O) als Schäum- und Treibmittel in den Milchbehälter eingeführt wird. Bei Betätigung des zugeordneten Zapfventils als Milchschaum-Zapfventil tritt mit N₂O angereicherte Milch aus. Das in der aufzuschäumenden Milch befindliche N₂O entspannt sich und verflüchtigt sich beim Verlassen des Milchschaum-Zapfventils und erzeugt dadurch den Milchschaum.

Eine Kombination der vorstehenden Merkmale ergibt eine einfach herstellbare und einfach handhabbare Vorrichtung für einen mobilen Milchschaum-Kaffee-Getränkbereiter. Dieser kann beispielsweise mobil in Transportmitteln, wie Zügen oder Flugzeugen oder bei Veranstaltungen eingesetzt werden.

Zweckmäßig werden aus Festigkeits- und Hygienegründen als Flüssigkeitsbehälter Edelstahlbehälter verwendet, bei denen die Ausströmöffnungen und die Behälteranschlussventile jeweils am tiefsten Behälterpunkt liegen. Die Anordnung ist dabei so gewählt, dass das Zapfen insbesondere aus dem Kaffeebehälter durch Gravitationskraft erfolgen kann. Da das Distickstoffoxyd einen gewissen Überdruck im Milchbehälter aufbaut, ist dieser als Druckbehälter auszuführen. Alle Leitungen, Ventile und Kupplungen sind zudem aus lebensmittelrechtlich zugelassenem Edelstahl und/oder Kunststoff auszuführen.

Gemäß Anspruch 2 ist die Druckpatrone über eine Schraubverbindung an einem in der Betriebsstellung oberen Bereich des Milchbehälters angeschlossen, wobei beim Einschraubvorgang ein Ventil oder eine Durchstoßöffnung der Druckpatrone für eine Verbindung mit dem Innenraum des Milchbehälters geöffnet wird. Zweckmäßig hat der Milchbehälter einen Inhalt von ca. 1,5 I und wird maximal mit etwa 1 I kalter Milch befüllt, so dass der Anschluss der Druckpatrone in einem Gasvolumen oberhalb des Milchflüssigkeitsspiegels liegt. Der Kaffeebehälter soll dagegen ein größeres Füllvolumen aufweisen.

Für eine konkrete Ausführung des Milchschaum-Zapfventils wird mit Anspruch 3 vorgeschlagen, dieses als federbelastetes Tellerventil auszuführen, bei dem der Ventilteller einen nach außen abragenden Stift in einer elastischen, endseitig offenen Tülle trägt. Durch eine Abstützung und Verbiegung der Tülle in einer Kaffeetasse und einer damit verbundenen Auslenkung des Stifts wird der Ventilteller aus der Geschlossenstellung am Ventilsitz in eine Stellung mit einem öffnungsspalt zum Austritt von mit N₂O angereicherter Milch bzw. von Milchschaum verlagert. Mit einem solchen Milchschaum-Zapfventil ist einfach und gut dosierbar Milchschaum herzustellen. Grundsätzlich können auch andere Ventilausführungen, z. B. in der Art von Nadelventilen verwendet werden, wobei es für eine effektive Milchschaumerzeugung wesentlich ist, dass enge Durchströmöffnungen freigebbar sind.

In einer alternativen Ausführungslösung der Aufgabe der Erfindung nach Anspruch 4 ist der Milchschaum-Kaffee-Getränkbereiter ebenfalls von einer bereiterexternen Energiezuführung unabhängig und mobil ausgeführt dergestalt, dass in einer Aufnahmehalterung zwei nachfüllbare und bevorzugt wechselbare Flüssigkeitsbehälter als Kaffeebehälter und Milchbehälter voneinander thermisch gedämmt angeordnet sind, die in der Betriebsstellung jeweils mit einer unteren Ausströmöffnung an ein zugeordnetes Behälteranschlussventil vorzugsweise eine Schnellkupplung der Aufnahmehalterung gekuppelt sind. Die Behälteranschlussventile sind durch Leitungen mit zugeordneten manuell betätigbaren Zapfventilen mit Zapföffnungen verbunden. Zudem sind dem Milchbehälter von einer bereiterexternen Energiezuführung unabhängige Milch-Aufschäum-Mittel zugeordnet, wobei im Strömungsverlauf zwischen dem Milchbehälter-Anschlussventil und dem nachgeordneten Milchschaum-Zapfventil ein Milchzwischenbehälter angebracht ist, in dem ein gesteuert über einen batteriebetriebenen Elektromotor angetriebener Milchschaumquirl zur Erzeugung von Milchschaum im Milchzwischenbehälter angeordnet ist. Der Milchzwischenbehälter ist bevorzugt als separater Behälter ausgeführt, welcher zu Reinigungszwecken entnommen werden kann.

In einer vorteilhaften Weiterbildung nach Anspruch 5 ist der Milchzwischenbehälter unterhalb des Milchbehälters angeordnet und enthält ein Schwimmerventil am Einlauf für eine dosierte, gesteuerte Milchnachförderung in den Milchzwischenbehälter. Bei Bedarf kann ein vorzugsweise im Bereich des Milchschaum-Zapfventils angebrachter Schalter betätigt und der Milchschaumquirl in Betrieb genommen werden, so dass Milch im Milchzwischenbehälter aufgeschäumt und durch die Zentrifugalkraft des Quirls weiter in die Zapfleitung zum Milchschaum-Zapfventil und aus der nachgeordneten Zapföffnung gedrückt wird.

In beiden vorstehenden alternativen Ausführungen wird nach Anspruch 6 die Aufnahmehalterung vorteilhaft als öffenbares, wärmegedämmtes Behältergehäuse ausgebildet mit zwei durch eine Wärmedämmwand abgeteilte Fächer als Warmfach für den Kaffeebehälter mit heißem Kaffee und als Kaltfach für den Milchbehälter mit gekühlter Milch, wobei ggf. ein Milchzwischenbehälter mit Milchschaumquirl im Kaltfach zusätzlich angeordnet ist. Das Behältergehäuse kann insbesondere aus einem Schaumblock aus geschäumtem Polypropylen hergestellt sein, wobei sich die Füllöffnungen der Flüssigkeitsbehälter im Bereich der Oberseite des Schaumblocks befinden. Auch die Leitungen an den Flüssigkeitsbehältern im Warmfach oder Kaltfach sowie die angeschlossenen Ventile und Kupplungen werden zweckmäßig thermisch gedämmt, so dass die jeweils zu zapfende Flüssigkeit ihre vorgegebene Temperatur bis zum zugeordneten Zapfventil beibehält. Grundsätzlich kann mit den vorstehenden Milchschaum-Kaffee-Getränkbereitern auch warme Milch aufgeschäumt werden; das Schäumergebnis ist jedoch mit gekühlter Milch wesentlich besser, so dass bevorzugt gekühlte Milch aus dem angegebenen Kaltfach zu verwenden ist.

Gemäß Anspruch 7 wird für eine modifizierte Ausführungsform ein weiterer Flüssigkeitsbehälter für ein weiteres Heißgetränk im Warmfach des Behältergehäuses mit gleicher Anschluss- und Zapftechnik wie für den Kaffeebehälter vorgeschlagen. Dieser weitere Flüssigkeitsbehälter ist vorzugsweise für heiße Milch vorgesehen, so dass damit auch einfache, herkömmliche MilchKaffee-Getränke je nach Bedarf, d. h. ohne aufgeschäumte Milch durch Mischen von Kaffee und heißer Milch hergestellt werden können.

In einer mobilen Ausführungsform nach Anspruch 8 sind die Behälteranschlussventile selbstschließend ausgeführt und mit den zugeordneten Zapfventilen als bauliche Einheit in der Art eines Ventilblocks ausgebildet. Damit liegen die Zapfventile fest im Bereich der Aufnahmehalterung bzw. des Behältergehäuses. Eine solche Ausführungsform eignet sich insbesondere für die Anbringung auf einem Fahrgestell entsprechend der zweiten Alternative von Anspruch 10, beispielsweise für einen Ausschank in den engen Gängen zwischen Zugabteilen.

Alternativ dazu sind nach Anspruch 9 die Zapfventile mit angeschlossenen Ausströmstutzen in einem Zapfkopf angeordnet, wobei die Zapfventile im Zapfkopf jeweils über einzelne flexible, gemeinsam in einem Leitungsschlauch geführte Leitungen, unmittelbar oder mittelbar über einen Schnellkupplungsblock an der Aufnahmehalterung bzw. dem Behältergehäuse mit den Behälteranschlussventilen verbunden sind. Diese Ausführungsform ist insbesondere entsprechend der ersten Alternative nach Anspruch 10 für eine tragbare Ausführung in der Art eines Rückentraggestells oder Rucksacks mit Traggurten geeignet. Die Leitungsschlauchlänge soll dabei für eine gute Handhabung etwa eine Länge von 90 cm aufweisen. Die Traggurte können abnehmbar ausgeführt werden. Diese Ausführungsform mit einem Zapfkopf und einem Leitungsschlauch kann durch eine Person getragen und bedient werden oder anderweitig mobil, beispielsweise über ein Fahrgestell transportiert werden.

Allen vorstehenden Ausführungsformen von Milchschaum-Kaffee-Getränkbereitern ist gemein, dass sie von einer bereiterexternen Energiezuführung unabhängig sind und damit mobil einsetzbar sind. Bei Bedarf können ggf. mit leichten Modifikationen und Anpassungen der Vorrichtung auch andere flüssige oder nahezu flüssige Medien, wie Cremen, Vanillesaucen etc. gezapft werden.

Anhand einer Zeichnung wird die Erfindung näher erläutert.

Es zeigen:
- Fig. 1: eine schematische Perspektivdarstellung eines Milchschaum-Kaffee-Getränkbereiters in einer ersten Ausführungsform,
- Fig. 2: eine schematische Perspektivdarstellung eines Milchschaum-Kaffee-Getränkbereiters in einer zweiten Ausführungsform,
- Fig. 3: eine schematische Schnittdarstellung durch den Milchschaum-Kaffee-Getränkbereiter von Fig. 1, wobei ein Milch-Aufschäummittel in einer ersten Ausführung dargestellt ist,

- Fig. 4: eine schematische Schnittdarstellung einer Detailvergrößerung eines Zapfkopfes von Fig. 3,
- Fig. 5: eine schematische Schnittdarstellung einer Detailvergrößerung eines Zapfventils von Fig. 3,
- Fig. 6: eine schematische Schnittdarstellung durch den Milchschaum-Kaffee-Getränkbereiter von Fig. 1, wobei ein Milch-Aufschäummittel in einer zweiten Ausführung dargestellt ist, und
- Fig. 7: eine schematische Schnittdarstellung einer Detailvergrößerung eines Milchzwischenbehälters von Fig. 6.

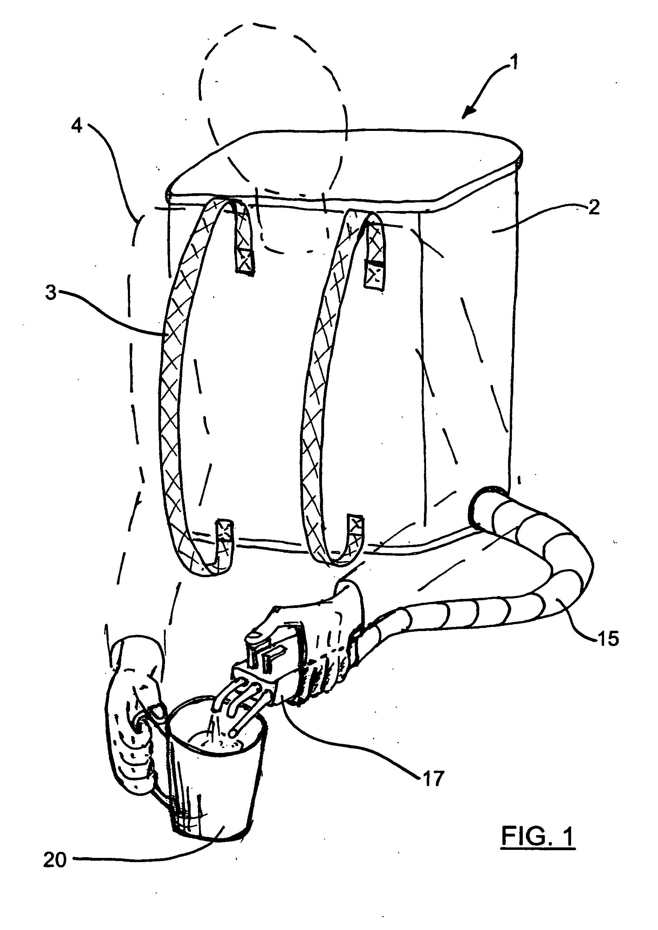

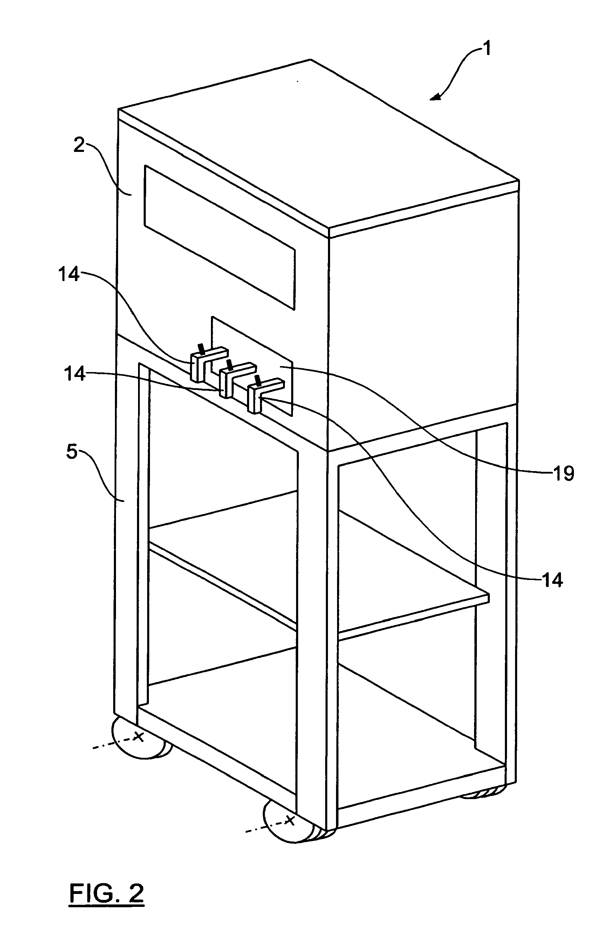

In den Fig. 1 und 2 ist jeweils schematisch in einer Perspektivdarstellung ein erfindungsgemäßer Milchschaum-Kaffee-Getränkbereiter 1 in zwei unterschiedlichen Ausführungsformen gezeigt. Eine als Behältergehäuse ausgebildete Aufnahmehalterung 2 des Milchschaum-Kaffee-Getränkbereiters 1 ist in der Ausführungsform von Fig. 1 in der Art eines Rückentraggestells mit Traggurten 3 ausgebildet, so dass der Milchschaum-Kaffee-Getränkbereiter 1 einfach von einer Person 4, die hier nur schematisch strichliert dargestellt ist, getragen und bedient werden kann. Bei der in Fig. 2 gezeigten Ausführungsform ist die Aufnahmehalterung 2 auf einem Fahrgestell 5 angeordnet, so dass der Milchschaum-Kaffee-Getränkbereiter 1 mobil mit dem Fahrgestell 5 transportiert werden kann. Ein bevorzugter Einsatz für die Ausführungsform von Fig. 1 ist beispielsweise bei Sportveranstaltungen o. ä. in Stadien bzw. Veranstaltungshallen; die Ausführungsform von Fig. 2 kann beispielsweise bevorzugt in engen Gängen zwischen Zugabteilen eingesetzt werden. Der Milchschaum-Kaffee-Getränkbereiter 1 ist in beiden Ausführungsformen so ausgebildet, dass er von einer bereiterexternen Energiezuführung unabhängig ist und damit vorteilhaft mobil eingesetzt werden kann.

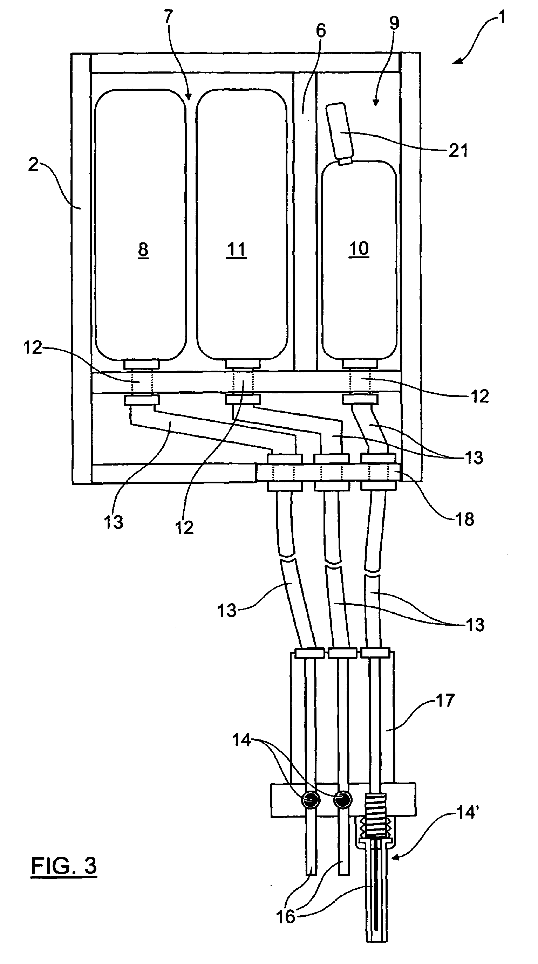

Ein konkreter Aufbau eines derartigen Milchschaum-Kaffee-Getränkbereiters 1 wird im folgenden im Zusammenhang mit der Beschreibung der Fig. 3 bis 7 näher erläutert.

In Fig. 3 ist eine schematische Schnittdarstellung durch den Milchschaum-Kaffee-Getränkbereiter 1 gezeigt. Die Aufnahmehalterung 2 ist als öffenbares Behältergehäuse ausgebildet, das mit einer Wärmedämmwand 6 in zwei Fächer unterteilt ist. Eines der Fächer ist als Warmfach 7 für einen Kaffeebehälter 8 mit heißem Kaffee und das andere Fach als Kaltfach 9 für einen Milchbehälter 10 mit gekühlter Milch ausgebildet. Im hier gezeigten Ausführungsbeispiel ist im Warmfach 7 ein weiterer Flüssigkeitsbehälter 11 für ein weiteres Heißgetränk beispielsweise für heiße Milch angeordnet.

In der Aufnahmehalterung 2 sind in der Betriebsstellung der Kaffeebehälter 8, der Milchbehälter 10 sowie der zusätzliche Flüssigkeitsbehälter 11 mit unteren Ausströmöffnungen an zugeordnete Behälteranschlussventile 12 der Aufnahmehalterung 2 angekuppelt. Von den einzelnen Behälteranschlussventilen 12 sind von jedem Flüssigkeitsbehälter 8, 10, 11 ausgehend Leitungen 13 mit zugeordneten manuell betätigbaren Zapfventilen 14 bzw. mit Zapföffnungen 14' vorgesehen.

Die Leitungen 13 sind für die in Fig. 1 dargestellte Ausführungsform des Milchschaum-Kaffee-Getränkbereiters 1 in einem Leitungsschlauch 15 zusammengefasst, wobei die Leitungsschlauchlänge für eine gute Handhabung etwa eine Länge von 90 cm aufweist. Dabei können die Zapfventile 14, 14' mit angeschlossenen Ausströmstutzen 16 in einem Zapfkopf 17 angeordnet sein. Der Leitungsschlauch 15, in dem die Leitungen 13 zusammengefasst sind, ist in Fig. 3 aus Übersichtlichkeitsgründen weggelassen, wobei die Leitungen 13 über einen Schnellkupplungsblock 18 an der Aufnahmehalterung 2 mittelbar mit den Behälteranschlussventilen 12 verbunden sind.

Für die Ausführungsform des Milchschaum-Kaffee-Getränkbereiters 1 von Fig. 2 sind die Behälteranschlussventile 12 selbstschließend ausgeführt, wobei die zugeordneten Zapfventile 14, 14' eine bauliche Einheit in der Art eines Ventilblocks 19 bilden. In beiden Ausführungsformen ist die Anordnung der Zapfventile 14, 14' gegenüber dem Kaffeebehälter 8, dem Milchbehälter 10 bzw. dem weiteren Flüssigkeitsbehälter 11 so gewählt, dass bei geöffnetem Zapfventil ein Ausfließen der jeweiligen Flüssigkeit aus dem jeweiligen Behälter 8, 10, 11 durch Gravitationskraft erfolgen kann. Bei der Ausführungsform mit Rückentraggestell mit Traggurten 3 kann von der die Aufnahmehalterung 2 tragenden Person 4 mit einer Hand ein zu füllender Becher 20 gehalten werden, wobei mit der anderen Hand die Bedienung des Zapfventils 14, 14' möglich ist. Bei der Anordnung der Aufnahmehalterung 2 auf dem Fahrgestell 5 kann durch Bedienung der Zapfventile 14, 14' am Ventilblock 19 einfach und schnell ein Getränk aus dem gewählten Behälter 8, 10, 11 gezapft werden.

Für die Zubereitung eines Cappuccinos mit aufgeschäumter Milch ist dem Milchbehälter 10 im Kaltfach 9 ein von einer bereiterexternen Energiezuführung unabhängiges Milch-Aufschäummittel zugeordnet. Bei dem in Fig. 3 dargestellten Ausführungsbeispiel des Milchschaum-Kaffee-Getränkbereiters 1 ist das Milch-Aufschäummittel als Druckpatrone 21 ausgebildet, das wechselbar am Milchbehälter 10 angeordnet ist. In der Druckpatrone 21 ist als Schäum- und Treibmittel Distickstoffoxyd (N₂O) angeordnet. Durch Betätigung des zugeordneten Zapfventils 14' als Milchschaum-Zapfventil tritt mit N₂O angereicherte Milch aus, wobei sich das in der aufzuschäumenden Milch befindliche N₂O entspannt und sich beim Verlassen des Milchschaum-Zapfventils 14' verflüchtigt, so dass damit Milchschaum erzeugt wird. Die Druckpatrone 21 kann über eine Schraubverbindung in einem in der Betriebsstellung des Milchbehälters 10 oberen Bereich angeschlossen werden, wobei beim Einschrauben der Druckpatrone 21 an den Milchbehälter 10 eine Strömungsverbindung zwischen der Druckpatrone 21 und dem Innenraum des Milchbehälters 10 hergestellt wird.

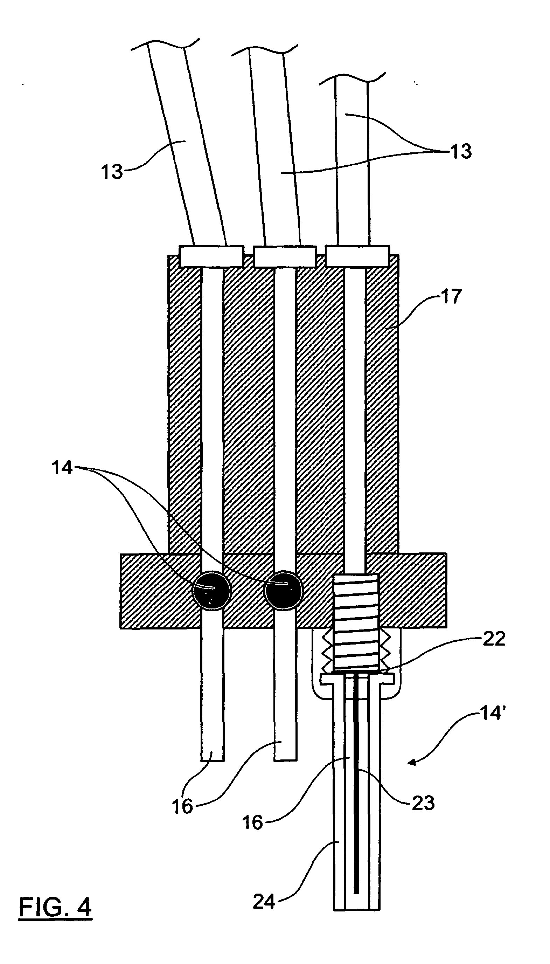

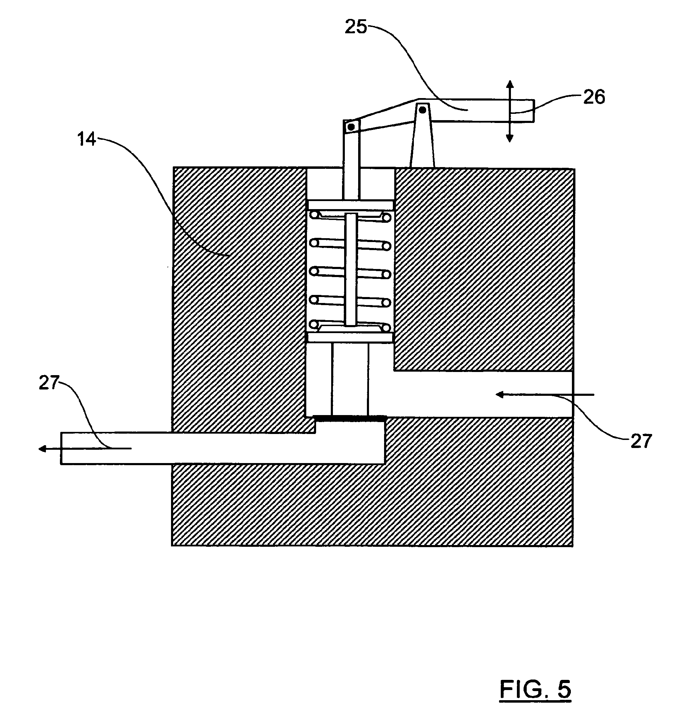

In Fig. 4 ist eine schematische Schnittdarstellung durch den Zapfkopf 17 von Fig. 3 dargestellt. Die in der Darstellung links und mittig im Zapfkopf 17 angeordneten Leitungen 13 führen zum Kaffeebehälter 8 bzw. zum weiteren Flüssigkeitsbehälter 11, die beide im Warmfach 7 angeordnet sind. Die zugeordneten Zapfventile 14 sind hier nur schematisch dargestellt, wobei im Zusammenhang mit der Beschreibung der Fig. 5 näher darauf eingegangen wird. Das Milchschaum-Zapfventil 14' ist als federbelastetes Tellerventil ausgeführt, bei dem ein Ventilteller 22 einen nach außen abragenden Stift 23 in einer elastischen, endseitig offenen Tülle 24 trägt. Wird das Milchschaum-Zapfventil 14' zum Zapfen von Milchschaum beispielsweise in einen Becher 20 eingeführt, so kann sich die Tülle 24 an der Becherwand abstützen und verbiegen, so dass damit eine Auslenkung des Stiftes 23 erfolgt. Durch diese Auslenkung des Stiftes 23 wird der Ventilteller 22 aus seiner Geschlossenstellung am Ventilsitz in eine Stellung mit einem Öffnungsspalt verlagert, so dass durch diesen Öffnungsspalt Milchschaum in den Becher 20 austreten kann. Wird das Milchschaum-Zapfventil 14' von der Becherwand wieder entfernt, so verlagert sich der Stift 23 wieder in seine Geschlossenstellung, so dass der Ventilteller 22 ebenfalls wieder in die Geschlossenstellung verlagert wird.

In Fig. 5 ist eine schematische Schnittdarstellung durch das Zapfventil 14 in einer beispielhaften Ausführungsvariante gezeigt. Durch Betätigung eines Tasters 25 (Pfeil 26) wird ein federbelastetes Ventil geöffnet, so dass Flüssigkeit in Pfeilrichtung eines Pfeiles 27 durch das Zapfventil 14 strömen kann. Wird der Taster 25 wieder entlastet, so schließt das Ventil automatisch aufgrund der Federvorspannung wieder, so dass damit der Flüssigkeitsstrom gestoppt ist.

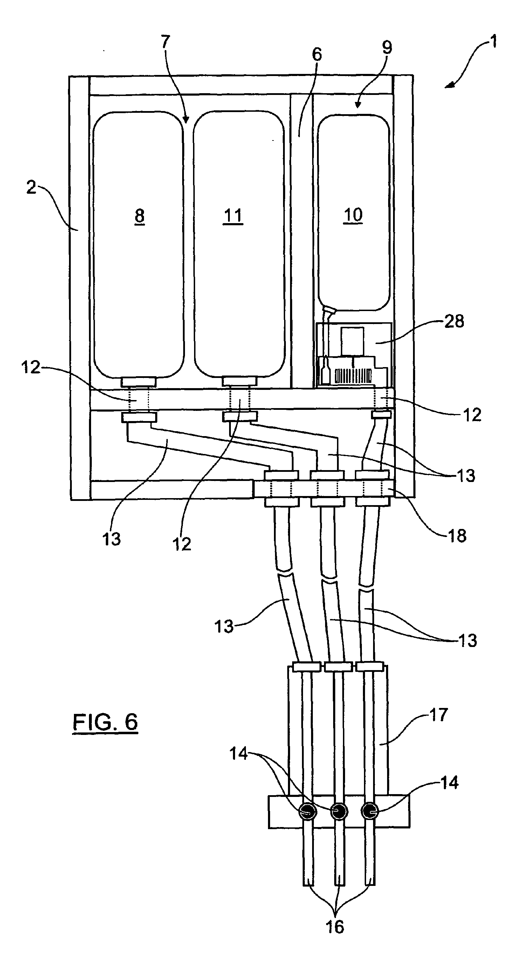

In Fig. 6 ist der Milchschaum-Kaffee-Getränkbereiter 1 in einer schematischen Schnittdarstellung gezeigt, wobei im Unterschied zu der in Fig. 3 dargestellten Ausführungsvariante im Kaltfach 9 dem Milchbehälter 10 anstelle der Druckpatrone 21 ein Milchzwischenbehälter 28 zur Erzeugung von Milchschaum zugeordnet ist. Der Milchzwischenbehälter 28 ist im Strömungsverlauf zwischen dem Milchbehälter 10 und dem Behälteranschlussventil 12 des Milchbehälters 10 angeordnet.

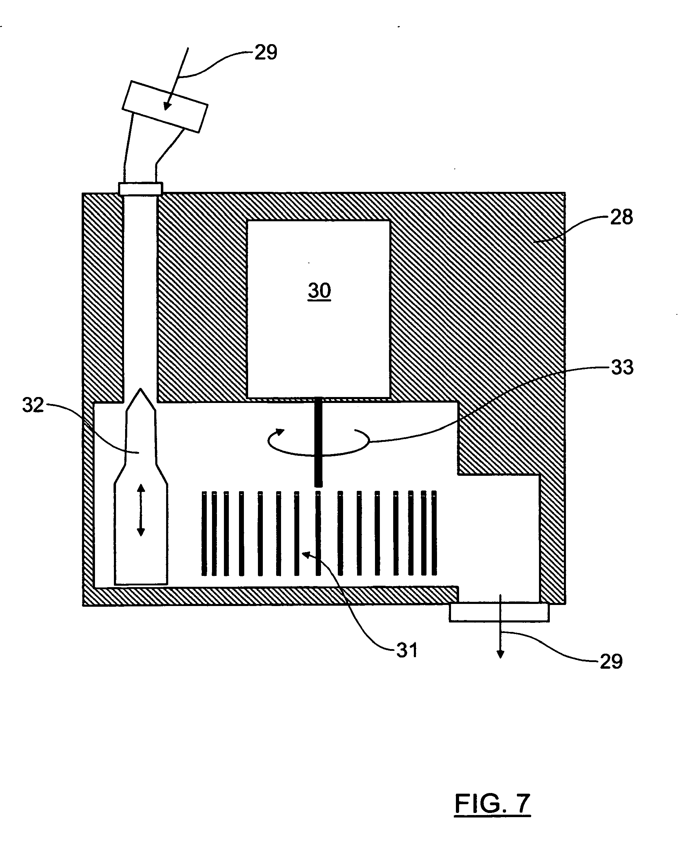

In Fig. 7 ist in einer vergrößerten Detailansicht eine Schnittdarstellung des Milchzwischenbehälters 28 gezeigt. Mit Pfeilen 29 ist die Durchströmung des Milchzwischenbehälters 28 mit vom Milchbehälter 10 kommender Milch in Richtung Behälteranschlussventil 12 strömender Milch eingezeichnet. Im Milchzwischenbehälter 28 ist ein batteriebetriebener Elektromotor 30 vorgesehen, der einen im Milchstrom angeordneten Milchschaumquirl 31 antreibt. Zudem ist im Milchzwischenbehälter 28 ein Schwimmerventil 32 am Einlauf vorgesehen, so dass eine dosierte, gesteuerte Milchnachförderung im Milchzwischenbehälter 28 möglich ist. Der Elektromotor 30 kann mit dem dem Milchbehälter 10 zugeordneten Zapfventil 14 so gekoppelt sein, dass bei einer Betätigung des Zapfventils 14 oder bei Betätigung eines Schalters der Elektromotor 30 den Milchschaumquirl 31 antreibt (Pfeil 33), so dass durch die Drehung des Milchschaumquirls 31 die durch den Milchzwischenbehälter 28 strömende Milch aufgeschäumt wird, wobei durch die Zentrifugalkraft des Milchschaumquirls 31 der Milchschaum weiter in Richtung Zapfventil 14 und aus der nachgeordneten Zapföffnung am Ausströmstutzen 16 gedrückt wird.

Unabhängig von den oben beschriebenen möglichen Ausführungsvarianten für den Milchschaum-Kaffee-Getränkbereiter 1 ist dieser immer von einer bereiterexternen Energiezuführung unabhängig und damit mobil ausgeführt. Durch die als Druckpatrone 21 bzw. als Milchschaumquirl 31 ausgebildeten Milch-Aufschäummittel, die ebenfalls von einer bereiterexternen Energiezuführung unabhängig ausgebildet sind, kann zudem auf einfache Weise ein Milchschaum-Kaffeegetränk in der Art eines Cappuccinos hergestellt werden. Die Aufnahmehalterung 2 mit den darin ausgebildeten beiden Fächern 7 und 9 ist zur Aufnahme der einzelnen Flüssigkeitsbehälter 8, 10 bzw. 11 und zum Anschluss der Zapfventile 14 bzw. 14' so ausgebildet, dass einfach und schnell eine Montage bzw. Demontage der einzelnen Bauteile möglich ist, wobei zudem eine gute Reinigungsmöglichkeit der einzelnen Bauteile gegeben ist.

## Patentansprüche

1. Milchschaum-Kaffee-Getränkbereiter
**dadurch gekennzeichnet,**
**dass** der Milchschaum-Kaffee-Getränkbereiter (1) von einer bereiterexternen Energiezuführung unabhängig und mobil ausgeführt ist, dergestalt,
**dass** in einer Aufnahmehalterung (2) zwei wechselbare und nachfüllbare Flüssigkeitsbehälter als Kaffeebehälter (8) und Milchbehälter (10) voneinander thermisch gedämmt angeordnet sind und in der Betriebsstellung jeweils mit einer unteren Ausströmöffnung an ein zugeordnetes Behälteranschlussventil (12) der Aufnahmehalterung (2) gekuppelt sind,
**dass** die Behälteranschlussventile (12) durch Leitungen (13) mit zugeordneten manuell betätigbaren Zapfventilen (14; 14') mit Zapföffnungen verbunden sind,
**dass** dem Milchbehälter (10) von einer bereiterexternen Energiezuführung unabhängige Milch-Aufschäummittel zugeordnet sind, indem aus einer daran wechselbar angeschlossenen Druckpatrone (21) Distickstoffoxyd (N₂O) als Schäum- und Treibmittel in den Milchbehälter (10) eingeführt wird, wodurch bei Betätigung des zugeordneten Zapfventils (14') als Milchschaumzapfventil dort Milchschaum zur Bereitung eines Milchschaum-Kaffee-Getränks austritt.

2. Milchschaum-Kaffee-Getränkbereiten nach Anspruch 1, **dadurch gekennzeichnet, dass** die Druckpatrone (21) über eine Schraubverbindung in einem in der Betriebsstellung oberen Bereich des Milchbehälters (10) angeschlossen ist, wobei beim Einschraubvorgang ein Ventil oder eine Durchstoßöffnung der Druckpatrone (21) für eine Verbindung mit dem Innenraum des Milchbehälters (10) geöffnet wird.

3. Milchschaum-Kaffee-Getränkbereiter, nach Anspruch 1 oder Anspruch 2, **dadurch gekennzeichnet, dass** das Milchschaumzapfventil (14') als federbelastetes Tellerventil ausgeführt ist, bei dem der Ventilteller (22) einen nach außen abragenden Stift (23) in einer elastischen, endseitig offenen Tülle (24) trägt, wobei durch eine Abstützung und Verbiegung der Tülle (24) in einer Kaffeetasse (20) und einer damit verbundenen Auslenkung des Stifts (23) der Ventilteller (22) aus der GeschlossenStellung am Ventilsitz in eine Stellung mit einem Öffnungsspalt zum Austritt von Milchschaum verlagert wird.

4. Milchschaum-Kaffee-Getränkbereiter
**dadurch gekennzeichnet,**
**dass** der Milchschaum-Kaffee-Getränkbereiter (1) von einer bereiterexternen Energiezuführung unabhängig und mobil ausgeführt ist, dergestalt,
**dass** in einer Aufnahmehalterung (2) zwei wechselbare und nachfüllbare Flüssigkeitsbehälter als Kaffeebehälter (8) und Milchbehälter (10) voneinander thermisch gedämmt angeordnet sind und in der Betriebsstellung jeweils mit einer unteren Ausströmöffnung an ein zugeordnetes Behälteranschlussventil (12) der Aufnahmehalterung (2) gekuppelt sind,
**dass** die Behälteranschlussventile (12) durch Leitungen (13) mit zugeordneten manuell betätigbaren Zapfventilen (14) mit Zapföffnungen verbunden sind,
**dass** dem Milchbehälter (10) von einer bereiterexternen Energiezuführung unabhängige Milch-Aufschäum-Mittel zugeordnet sind, indem im Strömungsverlauf zwischen dem Milchbehälter-Anschlussventil (12) und dem nachgeordneten Milchschaumzapfventil (14) ein Milchzwischenbehälter (28) angebracht ist, in dem ein gesteuert über einen batteriebetriebenen Elektromotor (30) angetriebener Milchschaumquirl (31) zur Erzeugung von Milchschaum im Milchzwischenbehälter (28) angeordnet ist, so dass bei Betätigung des Milchschaumzapfventils (14) dort Milchschaum zur Bereitung eines Milchschaum-Kaffee-Getränks austritt.

5. Milchschaum-Kaffee-Getränkbereiter nach Anspruch 4, **dadurch gekennzeichnet, dass** der Milchzwischenbehälter (28) unterhalb des Milchbehälters (10) angeordnet ist mit einem Schwimmerventil (32) am Einlauf für eine dosierte Milchnachförderung in den Milchzwischenbehälter (28).

6. Milchschaum-Kaffee-Getränkbereiter nach einem der Ansprüche 1 bis 5, **dadurch gekennzeichnet, dass** die Aufnahmehalterung (2) als öffenbares wärmegedämmtes Behältergehäuse ausgebildet ist mit zwei durch eine Wärmedämmwand (6) abgeteilte Fächer als Warmfach (7) für den Kaffeebehälter (8) mit dem heißen Kaffee und als Kaltfach (9) für den Milchbehälter (10) mit der gekühlten Milch, wobei ggf. ein Milchzwischenbehälter (28) im Kaltfach (9) angeordnet ist.

7. Milchschaum-Kaffee-Getränkbereiter nach Anspruch 6, **dadurch gekennzeichnet, dass** ein weiterer Flüssigkeitsbehälter (11) für ein weiteres Heißgetränk, vorzugsweise für heiße Milch, im Warmfach (7) des Behältergehäuses mit gleicher Anschluss- und Zapftechnik wie für den Kaffeebehälter (8) vorgesehen ist.

8. Milchschaum-Kaffee-Getränkbehälter nach einem der Ansprüche 1 bis 7, **dadurch gekennzeichnet, dass** die Behälteranschlussventile (12) selbstschließend ausgeführt sind und mit den zugeordneten Zapfventilen (14) eine bauliche Einheit in der Art eines Ventilblocks (19) bilden.

9. Milchschaum-Kaffee-Getränkbereiter nach einem der Ansprüche 1 bis 7, **dadurch gekennzeichnet, dass** die Zapfventile (14) mit angeschlossenen Ausströmstutzen (16) in einem Zapfkopf (17) angeordnet sind,
dass die Zapfventile im Zapfkopf jeweils über einzelne flexible, gemeinsam in einem Leitungsschlauch (15) geführte Leitungen (13) unmittelbar oder mittelbar über einen Schnellkupplungsblock (18) an der Aufnahmehalterung (2) bzw. dem Behältergehäuse mit den Behälteranschlussventilen (12) verbunden sind.

10. Milchschaum-Kaffee-Getränkbereiter nach einem der Ansprüche 1 bis 9, **dadurch gekennzeichnet, dass** für die Mobilität des Milchschau-Kaffee-Getränkbereiters (1) die Aufnahmehalterung (2) als Behältergehäuse in der Art eines Rückentraggestells/Rucksacks mit Traggurten (3) ausgebildet ist und/oder auf einem Fahrgestell (5) befestigt ist.

## Claims

1. Cappuccino maker
**characterized**
**in that** the cappuccino maker (1) is designed to be independent of an external power supply being provided and to be mobile, in such a way
that two replaceable and replenishable liquid containers are arranged, thermally insulated from one another, as a coffee container (8) and a milk container (10) in a holder (2) and, in the operating position, are each coupled by a lower outlet opening to an associated container connecting valve (12) for the holder (2),
**in that** the container connecting valves (12) are connected by lines (13) to associated manually operable tap valves (14; 14') with tap openings,
**in that** the milk container (10) has an associated milk foaming means which is independent of an external power supply being provided, in that nitrous oxide (N₂O) is introduced as a foaming agent and propellant into the milk container (10), from a pressure cartridge (21) which is replaceably connected to it as a result of which milk foam emerges, on operation of the associated tap valve (14') as a milk foam tap valve, in order to produce a cappuccino drink.

2. Cappuccino maker according to Claim 1, **characterized in that** the pressure cartridge (21) is connected via a screw connection in an area of the milk container (10) which is an upper area in the operating position, with a valve or a break-through opening in the pressure cartridge (21) being open during the screwing-in process for connection to the interior of the milk container (10).

3. Cappuccino maker according to Claim 1 or Claim 2, **characterized in that** the milk-foam tap valve (14') is in the form of a spring-loaded disc valve in which the valve disc (22) has a pin (23) which projects outwards in an elastic spout (24) which is open at the end, with the valve disc (22) being moved from the closed position on the valve seat to a position with an opening gap for milk foam to emerge from, as a result of the spout (24) being supported and bent in a coffee cup (20), as a result of the pin (23) being deflected as a consequence of this.

4. Cappuccino maker
**characterized**
**in that** the cappuccino maker (1) is designed to be independent of an external power supply being provided and to be mobile, in such a way
that two replaceable and replenishable liquid containers are arranged, thermally insulated from one another, as a coffee container (8) and a milk container (10) in a holder (2) and, in the operating position, are each coupled by a lower outlet opening to an associated container connecting valve (12) for the holder (2),
**in that** the container connecting valves (12) are connected by lines (13) to associated manually operable tap valves (14) with tap openings,
**in that** the milk container (10) has an associated milk foaming means which is independent of an external power supply being provided, in that an intermediate milk container 28 is fitted in the flow path between the milk container connecting valve (12) and the downstream milk foam tap valve (14), in which intermediate milk container (28), a milk-foaming blender (31) which is driven by a battery-powered electric motor (30), is arranged in order to produce milk foam in the intermediate milk container (28), such that, when the milk-foam tap valve (14) is operated, milk foam emerges there in order to produce a cappuccino drink.

5. Cappuccino maker according to Claim 4, **characterized in that** the intermediate milk container (28) is arranged under the milk container (10), with a float valve (32) at the inlet in order to pass milk in a metered manner to the intermediate milk container (28).

6. Cappuccino maker according to one of Claims 1 to 5, **characterized in that** the holder (2) is in the form of a thermally insulated container housing which can be opened and has two compartments, which are divided by a thermally insulating wall (6), as a hot compartment (7) for the coffee container (8) with the hot coffee and as a cold compartment (9) for the milk container (10) with the cooled milk, with an intermediate milk container (28) being arranged in the cold compartment (9), if required.

7. Cappuccino maker according to Claim 6, **characterized in that** a further liquid container (11) for a further hot drink, preferably for hot milk, is provided in the hot compartment (7) of the container housing, using the same connection and tap technique as for the coffee container (8).

8. Cappuccino maker according to one of Claims 1 to 7, **characterized in that** the container connecting valves (12) are designed to be self-closing and, together with the associated tap valves (14), form a physical unit in the form of a valve block (19).

9. Cappuccino maker according to one of Claims 1 to 7, **characterized in that** the tap valves (14) together with outlet connecting stubs (16) connected to them, are arranged in a tap head (17),
**in that** the tap valves in the tap head are each connected to the container connecting valves (12) via individual flexible lines (13), which are routed jointly in a flexible line tube (15), directly or indirectly via a quick-release coupling block (18) to the holder (2) and the container housing.

10. Cappuccino maker according to one of Claims 1 to 9, **characterized in that**, for mobility of the cappuccino maker (1), the holder (2) is a container housing in the form of a backpack/rucksack with supporting straps (3), and/or is mounted on a chassis (5).

## Revendications

1. Appareil de préparation pour cappuccino
**caractérisé en ce que**
l'appareil de préparation pour cappuccino (1) est réalisé de façon mobile et indépendamment d'une amenée d'énergie externe à l'appareil de préparation, de telle sorte que
deux conteneurs de liquide échangeables et rechargeables, en tant que conteneur de café (8) et conteneur de lait (10), sont disposés dans une fixation de logement (2) en étant thermiquement isolés l'un de l'autre et, dans la position de fonctionnement, sont couplés respectivement à une ouverture d'évacuation inférieure sur une soupape de raccordement de conteneur (12) associée de la fixation de logement (2),
**en ce que** les soupapes de raccordement de conteneur (12) sont reliées par des conduites (13) à des soupapes de distribution (14, 14') associées dotées d'ouvertures de distribution et pouvant être actionnées manuellement,
**en ce que** des moyens de moussage de lait indépendants d'une amenée d'énergie externe à l'appareil de préparation sont associés au conteneur de lait (10), en introduisant, à partir d'une cartouche sous pression (21) raccordée à ceux-ci de manière interchangeable, du monoxyde d'azote (N₂O) comme agent moussant et propulseur dans le conteneur de lait (10), la mousse de lait destinée à préparer un cappuccino sortant à cet endroit lorsque la soupape de distribution (14') associée, en tant que soupape de distribution de mousse de lait, est actionnée.

2. Appareil de préparation pour cappuccino selon la revendication 1, **caractérisé en ce que** la cartouche sous pression (21) est raccordée par une liaison boulonnée dans une zone supérieure du conteneur de lait (10) dans la position de fonctionnement, une soupape ou une ouverture de perforation de la cartouche sous pression (21), au cours du processus de vissage, étant ouverte pour une liaison à l'espace intérieur du conteneur de lait (10).

3. Appareil de préparation pour cappuccino, selon la revendication 1 ou la revendication 2, **caractérisé en ce que** la soupape de distribution de mousse de lait (14') est conçue comme une soupape à disque sollicitée par un ressort, dans laquelle le disque de soupape (22) supporte un goupillon (23) dépassant vers l'extérieur dans un embout (24) élastique, ouvert côté extrémité, un appui et une déformation de l'embout (24) dans une tasse à café (20) et une déviation associée du goupillon (23) du disque de soupape déplaçant le disque de soupape (22) de la position fermée sur le siège de soupape à une position comprenant une fente d'ouverture destinée à faire sortir la mousse de lait.

4. Appareil de préparation pour cappuccino
**caractérisé en ce que**
l'appareil de préparation pour cappuccino (1) est réalisé de façon mobile et indépendamment d'une amenée d'énergie externe à l'appareil de préparation, de telle sorte que
deux conteneurs de liquide interchangeables et rechargeables, en tant que conteneur de café (8) et conteneur de lait (10), sont disposés dans une fixation de logement (2) en étant thermiquement isolés l'un de l'autre et, dans la position de fonctionnement, sont couplés respectivement à une ouverture d'évacuation inférieure sur une soupape de raccordement de conteneur (12) associée de la fixation de logement (12),
**en ce que** les soupapes de raccordement de conteneur (12) sont reliées par des conduites (13) à des soupapes de distribution (14) associées dotées d'ouvertures de distribution et pouvant être actionnées manuellement,
**en ce que** des moyens de moussage de lait indépendants d'une amenée d'énergie externe à l'appareil de préparation sont associés au conteneur de lait (10), en aménageant dans le tracé d'écoulement entre la soupape de raccordement de conteneur de lait (12) et la soupape de distribution de mousse de lait (14) placée en aval un conteneur intermédiaire de lait (28), dans lequel est disposé un batteur à mousse de lait (31) entraîné de façon commandée par un moteur électrique (30) actionné par une batterie, destiné à produire la mousse de lait dans le conteneur intermédiaire de lait (28), de sorte que lorsque la soupape de distribution (14) est actionnée, la mousse de lait destinée à préparer un cappuccino sort à cet endroit.

5. Appareil de préparation pour cappuccino selon la revendication 4, **caractérisé en ce que** le conteneur intermédiaire de lait (28) est disposé au-dessous du conteneur de lait (10) avec une soupape à flotteur (32) à l'entrée d'une charge additionnelle de lait dosée dans le conteneur intermédiaire de lait (28).

6. Appareil de préparation pour cappuccino selon l'une quelconque des revendications 1 à 5, **caractérisé en ce que** la fixation de logement (2) est conçue comme un boîtier de conteneur pouvant être ouvert et thermiquement isolé et comportant deux compartiments divisés par une paroi d'isolation thermique (6) en tant que compartiment chaud (7) pour le conteneur de café (8) comprenant le café chaud et en tant que compartiment froid (9) pour le conteneur de lait (10) comprenant le lait froid, un conteneur intermédiaire de lait (28) étant disposé dans le compartiment froid (9).

7. Appareil de préparation pour cappuccino selon la revendication 6, **caractérisé en ce qu'**un autre conteneur de liquide (11) pour une autre boisson chaude, de préférence pour du lait chaud, est prévu dans le compartiment chaud (7) du boîtier de conteneur avec la même technique de raccordement et de distribution que pour le conteneur de café (8).

8. Appareil de préparation pour cappuccino selon l'une quelconque des revendications 1 à 7, **caractérisé en ce que** les soupapes de raccordement de conteneur (12) sont conçues avec un verrouillage automatique et forment avec les soupapes de distribution (14) associées une unité modulaire à la façon d'appareils groupés (19).

9. Appareil de préparation pour cappuccino selon l'une quelconque des revendications 1 à 7, **caractérisé en ce que** les soupapes de distribution (14) sont disposées avec des tubulures d'évacuation (16) raccordées dans une tête de distribution (17),
**en ce que** les soupapes de distribution sont reliées aux soupapes de raccordement de conteneur (12) dans la tête de distribution respectivement par des conduites (13) individuelles flexibles, guidées conjointement dans un tuyau de conduite (15), directement ou indirectement par un bloc de raccordement rapide (18) sur la fixation de logement (2) et/ou le boîtier de conteneur.

10. Appareil de préparation pour cappuccino selon l'une quelconque des revendications 1 à 9, **caractérisé en ce que**, pour la mobilité de l'appareil de préparation pour cappuccino (1), la fixation de logement (2), en tant que boîtier de conteneur, est conçue à la façon d'une charpente dorsale/sac à dos comprenant des sangles de portage (3) et/ou fixée sur un châssis (5).
